(19) Europäisches Patentamt
European Patent Office
Office européen des brevets

(11) **EP 3 156 381 B1**

(12) **EUROPEAN PATENT SPECIFICATION**

(45) Date of publication and mention of the grant of the patent:
**13.06.2018 Bulletin 2018/24**

(51) Int Cl.:
***C04B 18/02*** *(2006.01)*    ***C04B 40/00*** *(2006.01)*

(21) Application number: **15189346.8**

(22) Date of filing: **12.10.2015**

(54) **PROCESS FOR PREPARING GRANULES**

VERFAHREN ZUR HERSTELLUNG VON GRANULAT

PROCÉDÉ DE PRÉPARATION DE GRANULES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.04.2017 Bulletin 2017/16**

(73) Proprietor: **Saint-Gobain Ecophon AB**
**260 61 Hyllinge (SE)**

(72) Inventors:
• **YAMMINE, Joumana**
**93300 ROSNY SOUS BOIS (FR)**
• **ARVIDSSON, Emma**
**254 55 HELSINGBORG (SE)**

(74) Representative: **Saint-Gobain Recherche Département Propriété Industrielle 39 Quai Lucien Lefranc 93300 Aubervilliers (FR)**

(56) References cited:
**EP-A1- 2 415 721      WO-A2-00/26154**
**DE-A1- 4 122 334      JP-A- 2001 206 748**
**JP-A- 2002 187 751**

EP 3 156 381 B1

**Description**

The present invention relates to a process for manufacturing granules from mineral wool waste. The granules thus obtained may in particular be used for applications concerning grounds, for example for draining soils. They also may be used to improve acoustical properties, sound insulation, impact noise, walking noise when they are used as fillers for examples in slabs or wood structures or as floor levelling for example in wood or concrete slabs.

Mineral wool residues or waste, and in particular glass wool or rock wool residues or waste and used panels are generally agglomerated in the form of briquettes or other compact shapes in order to be recycled and used in mineral wool manufacturing processes. In order to carry out this agglomeration, these mineral wool residues are mixed with a binder that makes it possible to ensure the cohesion and the hardening of the assembly in the desired form. This binder is generally a cementitious binder. Recent developments in mineral wool manufacturing processes mean that the binders formerly used for binding the mineral wool which were based on phenolic resins have been replaced by binders based on raw materials derived from renewable resources and in particular comprising sugars. Consequently, the recycling of products comprising mineral wool must be adapted due to the high content of sugars in these products. Indeed, the products used currently may comprise up to 10%by weight of sugar-based resins, with respect to the total weight of the fibrous waste. However, sugar is a cement setting retarder, and leads to a significant reduction in the mechanical strength and in the abrasion resistance of the agglomerates, which are thus weakened and have a tendency to release large amounts of dust. Another disadvantage of these agglomerates is that they do not keep correctly their form and cannot be used for the desired applications. It is therefore necessary to adapt the processes for compounding these novel types of mineral wool waste in order to obtain the desired mechanical performance levels.

Patent application EP 2 415 721 describes compacted briquettes that can be used as mineral charge in processes for manufacturing man-made vitreous fibres (MMVFs), said briquettes being based on recycled mineral wool waste sized with a binder comprising a sugar and also the product of the chemical reaction between a polycarboxylic acid and an amine. The solution proposed consequently consists in adapting the resin used for binding the fibres during their manufacturing processes in order to then facilitate their recycling, which may sometimes be difficult to carry out.

JP2002187751 discloses a method for providing an aggregate from powdery waste rock wool, granulated with water and an inorganic hydraulic material comprising also an accelerator. The present invention itself proposes a workable solution for preparing granules suitable for use especially in a soil. The objective of the invention is to make it possible to directly use waste from fibres sized by sugar-based resins, without it being necessary to modify the binder system. For this, the present invention proposes to add, during the process for manufacturing the granules, a selected setting accelerator additive for cementitious binders in order to compensate for the retarding effects that may be induced by the sugars present in the binder resin.

The invention relates to a process for preparing granules from mineral wool fragments comprising at least one binder resin comprising a sugar, said process comprising the steps of:

-    granulation consisting in mixing mineral wool fragments with at least one hydraulic binder in a granulator, in the presence of water and a setting accelerator additive that comprises at least one water-soluble calcium salt and at least one alkali metal silicate compound, the amount of mineral wool fragments representing at least 70%by weight of the total weight of the dry composition, i.e. of the total weight of the mineral wool fragments and the hydraulic binder, and
-    drying the obtained granules.

The expression "mineral wool fragments" is understood within the context of the present invention to mean all the residues of products comprising mineral wool, such as glass wool or rock wool. These residues may be derived from the production of mineral wool. They may also be derived from finished products comprising mineral wool panels, such as for example the glass wool panels used in ceilings or walls. The mineral wool fragments were generally ground before being introduced into the mixture, but they generally retain their fibrous nature since it remains possible, after grinding, to make out fibres having a length greater than 5 mm with the naked eye.

The term "sugar" is understood within the context of the present invention to mean carbohydrates such as monosaccharides, disaccharides, oligosaccharides, polysaccharides, including sugar alcohols, and mixtures thereof. Sugar-based binding compositions are in particular described in applications US2010/ 0282996, US2012/0263934, WO 2012/ 168619 or WO 2012/ 168621. The binding composition included in the mineral wool fragments generally represents 0.1%to 10%by weight, and more particularly 0.5%to 7%by weight of dry binder material with respect to the total weight of the dry mineral wool fragments.

The expression "granule" is understood within the context of the present invention as solid particles made of compacted materials, having preferably cylindrical or spherical shape. Typically their diameter or size is comprised between 3 and 40 mm. The granules need not have a reproducible shape, and therefore are preferably not obtained by molding, but merely by growing particles of cementitious wet mix (typically in a rotating drum). To that extent, the particle diameter is understood as a maximum extension of the solid.

In the present invention, when referring to weight of dry composition, it is understood that it is the total weight of the mineral wool fragments and the hydraulic binder.

The setting accelerator additive used in the present invention is a mixture of at least one water-soluble calcium salt and at least one alkali metal silicate compound. According to the preceding definition, the setting accelerator is not a part of the dry composition.

The alkali metal silicate is selected from sodium silicate, sodium metasilicate, potassium silicate, potassium metasilicate, lithium silicate, lithium metasilicate and mixtures thereof. Preferably the alkali metal silicate is selected from sodium silicate, sodium metasilicate and mixtures thereof.

The water-soluble calcium salt is selected from calcium formate, calcium acetate, calcium citrate, calcium lactate, calcium gluconate, calcium tartrate, calcium oxalate, calcium propionate, calcium stearate, calcium chloride, calcium bromide, calcium fluoride, calcium iodide, calcium chlorate, calcium iodate, calcium phosphate, calcium nitrate, calcium nitrite, calcium hypochloride, calcium bicarbonate, calcium sulphide, calcium hydroxide and mixtures thereof. Preferably, the calcium salt is selected from calcium hydroxide, calcium nitrate and mixtures thereof.

The weight ratio between the calcium salt and the alkali metal silicate in the setting accelerator additive is between 0.2 and 2. Preferably the weight ratio is 1, the additive comprising in this case as much calcium salt as alkali metal silicate.

In the process according to invention, the granules are obtained by mixing at least 70% by weight of mineral wool fragments with at most 30% of hydraulic binder. Preferably, the amount of mineral wool fragments mixed for the manufacture of the granules represents more than 80% by weight of the total weight of the dry composition, and more preferably still more than 90%by weight of the total weight of the dry composition.

The content of each of the constituents of the setting accelerator additive that is introduced into the mixture represents from 0.5%to 10%of the total weight of the dry composition. The content of calcium salt and the content of alkali metal silicate added to the mixture therefore each represents from 0.5%to 10%of the total weight of the dry composition. Preferably, this content represents between 0.8% and 5% of the total weight of the dry composition. The amount of each constituent of the setting accelerator additive is sufficient so that the setting time of the hydraulic binder is compatible with the granulation process. The setting time is short enough so that the granules harden directly in the granulator, without gluing together. These additives are efficient to compensate for the significant retarding effect due to the sugars present in the binding composition of the fibrous waste.

The hydraulic binder is selected from Portland cements, calcium aluminate cements, sulphoaluminate cements, belite cements, blast-furnace slags, cements of pozzolanic mixtures optionally comprising fly ash, silica fumes, limestone, calcined schist, natural or calcined pozzolans and/or natural or calcined clays all of these cements being used alone or as a mixture. Preferably, the hydraulic binder is chosen among Portland cements of CEM I or CEM II type and blast furnace slag, alone or in mixture.

The amount of water introduced during the mixing of the various constituents may represent up to 30%of the total weight of the dry composition. The flow rate of water introduced during the mixing varies between 3 and 5 l/ min. This flow rate may be adjusted as a function of the size of the granules that it is desired to obtain. The amount of water may also be adjusted during the granulation by direct spraying over the granules in the process of being formed.

Preferably, the various constituents of the setting accelerator additive, namely the alkali metal silicate and the calcium salt, are pre-mixed and pre-dissolved in water before being added to the mixture of the mineral wool fragments and hydraulic binder. The pre-dissolving is advantageously carried out at a temperature above 35°C. It is not necessary to obtain a complete dissolution of the additives in water: a suspension of the mineral additives into water works efficiently.

The amount of water introduced during the mixing of the various constituents may represent up to 30%of the total weight of the dry composition. The flow rate of liquid introduced during the mixing varies between 3 and 5 l/ min. This liquid consists of water in which the constituents of the accelerator additive have been dissolved. This flow rate may be adjusted as a function of the size of the granules that it is desired to obtain. It is also possible to supplement the amount of liquid needed during the process by adding water directly during the granulation by spraying over the granules in the process of being formed.

The mixing in the granulator may be carried out by simultaneously introducing the mineral wool fragments, the hydraulic binder, the water and the pre-dissolved setting accelerator additive. It is also possible to firstly mix the hydraulic binder, the water and the pre-dissolved setting accelerator additive, then to add the mineral wool fragments.

The granulation is made in a rotating drum. This drum is preferably equipped with a plate that is inclined related to the vertical line. The inclination could be adjusted and is for example around 10° related to the vertical line. The plate rotates with a velocity of approximately 1m/s. The material is processed in the plate during approximately 1 minute.

After the step of mixing in the granulator, the granules are dried before falling in pile and being stored. The drying could be made on a conveyor, or in a rotating drum or in an oven. The drying is carried out at ambient temperature. It is possible to accelerate this drying step by sending a stream of hot air, at a temperature that varies between 60°C and 120°C, over the granules for a time that varies between 3 and 30 minutes. It is essential that the granules have sufficient mechanical strength to withstand the fall and the transportation for the storage. The abrasion resistance of the granules must be sufficient to prevent a significant amount of dust from being formed in the granulator. Indeed, under the effect of the rotation in the granulator, the granules knock against each other as soon as they are hardened. If their abrasion resistance is not sufficient, they risk being subjected to great mechanical damage and therefore a significant decrease in their diameter at the same time as the generation of undesired dust.

The process according to invention makes it possible to obtain granules which have very good compressive mechanical strength and also very good abrasion resistance.

The granules thus obtained are of spherical shape and have a diameter of between 3 and 30 mm.

The present invention also relates to the use of the granules obtained by the process described above as fillers in slabs or wood structures to improve the sound environment. It can also be used as floor levelling for example in wood and concrete slabs, also to improve sound insulation, impact noise, walking noise, etc. These granules could also be used as soil drainage material.

The examples below illustrate the invention without limiting the scope thereof.

Mechanical tests and also abrasion tests were carried out on various granules obtained by the process according to the present invention.

The granulation process was carried out on the laboratory scale under conditions as close as possible to those that take place on the industrial scale. The granulation is carried out in a rotating bowl in the following manner:

- the mineral wool fragments and the hydraulic binder are dry mixed for around 30 seconds in the bowl rotating at a speed of around 110 rpm,
- then the water is added, at the same time as the various additives including the setting accelerator additive, the whole mixture continuing to be rotated for around 90 seconds,
- the whole mixture is mixed with a spatula for around 3 minutes in order to avoid the formation of aggregates, then
- the granulation is continued in the rotating bowl for a duration of around 30 minutes for drying and final homogenization.

The granules thus obtained are analysed in order to test their abrasion resistance, by adapting the European standard CEN 15210.

The granules with a mean diameter of between 2 and 4 mm are weighed before being introduced into a Turbula 3D mixer where they are rotated in 3D for a duration of 15 minutes (initial mass m1). During these rotational movements, the granules knock against each other. At the end of the cycle, the dust originating from the granules is collected and only the remaining granules are weighed (final mass m2). The residual granule content is calculated in the following manner:

$$DU\ (\%) = 100 \times \frac{m2}{m1}$$

Compressive mechanical strength tests were carried out on samples in the form of test specimens having dimensions of $2 \times 2 \times 10\ cm^3$, as are customarily carried out in the field of construction materials. These tests, even though they are not carried out on granules, make it possible to estimate the compressive mechanical strength of the mixtures studied.

The test specimens are prepared in the following manner:

- the mineral wool fragments and hydraulic binder are dry mixed in a rotating mixer for around 10 seconds at the speed of 81 rpm,
- then the water is added, at the same time as the various additives including the setting accelerator additive, the whole mixture continuing to be rotated at a speed of around 99 rpm for around 30 seconds,
- the whole mixture continues to be rotated for around 90 seconds at a rotational speed of around 172 rpm in order to correctly homogenize the whole mixture.

The paste thus obtained is poured into moulds for a time of maturation. After 1 day, the test specimens are removed from the moulds and the compressive mechanical tests are carried out on the $2 \times 2\ cm^2$ cross section with a Zwick Roell 7010 machine combined with a 10 kN load cell.

The amounts of setting accelerator additives given in the examples correspond to the number of parts of each of the constituents of the mixture added to 100 parts of dry composition consisting of the mixture of the mineral wool fragments and hydraulic binder.

The setting accelerator that is used is a mixture of sodium metasilicate Metso 520 from PQ Corporation, and of lime from Finj a Sackt Murkalk E.

The hydraulic binders that are used in the following examples are :

- CEM I 42.5 N from supplier Cementa
- CEM II / A-V 52.5 N from supplier Cementa

Example 1

Test specimens of different compositions are prepared as described above.

- Test specimen 1-A (comparative): 90 parts of mineral wool fragments comprising a sugar-based binding resin are mixed with 10 parts of hydraulic binder of CEM II type.
- Test specimen 1-B (comparative): 90 parts of mineral wool fragments comprising a sugar-based binding resin mixed with 10 parts of hydraulic binder of CEM I type.
- Test specimen 2 (comparative): 90 parts of mineral wool fragments comprising a sugar-based binding resin mixed with 10 parts of hydraulic binder of CEM I type. 5 parts of sodium silicate are added to this mixture.
- Test specimen 3 (comparative): 90 parts of mineral wool fragments comprising a sugar-based binding resin mixed with 10 parts of hydraulic binder of CEM I type. 5 parts of lime are added to this mixture.
- Test specimen 4 (according to the invention): 90 parts of mineral wool fragments comprising a sugar-based binding resin mixed with 10 parts of hydraulic binder of CEM I type. 2.5 parts of sodium silicate and 2.5 parts of lime are added to this mixture.

The test specimens are all prepared by adding 26% by weight of water relative to the total weight of the dry composition (mineral wool fragments and cement binder).

Table 1 below gives the values of the compressive strength measured for each of the test specimens.

Table 1

|  | compressive strength (MPa) after 3 days | compressive strength (MPa) after 7 days | compressive strength (MPa) after 14 days | compressive strength (MPa) after 28 days |
|---|---|---|---|---|
| test specimen 1-A | 0.1 | 1.1 | 1.2 | 1.2 |
| test specimen 1-B | 0.1 | 1 | 1.4 | 1.4 |
| test specimen 2 | 0.1 | 0.1 | 0.7 | 1.0 |
| test specimen 3 | 0.1 | 0.2 | 0.2 | 0.2 |
| test specimen 4 | 1.7 | 3.9 | 6.2 | 6.2 |

Example 2:

Other test specimens of different compositions are prepared as described above by varying the amount of setting accelerator additives for each one.

- Test specimen 5 (comparative): 95 parts of mineral wool fragments comprising a sugar-based binding resin mixed with 5 parts of hydraulic binder of CEM I type.
- Test specimen 6 (according to the invention): 95 parts of mineral wool fragments comprising a sugar-based binding resin mixed with 5 parts of hydraulic binder of CEM I type. 1.8 parts of sodium silicate and 1.8 parts of lime are added to this mixture.

- Test specimen 7 (according to the invention): 95 parts of mineral wool fragments comprising a sugar-based binding resin mixed with 5 parts of hydraulic binder of CEM I type. 1.4 parts of sodium silicate and 1.4 parts of lime are added to this mixture.

- Test specimen 8 (according to the invention): 95 parts of mineral wool fragments comprising a sugar-based binding resin mixed with 5 parts of hydraulic binder of CEM I type. 1.2 parts of sodium silicate and 1.2 parts of lime are added to this mixture.

- Test specimen 9 (according to the invention): 95 parts of mineral wool fragments comprising a sugar-based binding resin mixed with 5 parts of hydraulic binder of CEM I type. 0.9 part of sodium silicate and 0.9 part of lime are added to this mixture.

- Test specimen 10 (according to the invention): 95 parts of mineral wool fragments comprising a sugar-based binding resin mixed with 5 parts of hydraulic binder of CEM I type. 0.6 part of sodium silicate and 0.6 part of lime are added to this mixture.

Table 2 below gives the values of the compressive strength measured for each of the test specimens

Table 2

|  | compressive strength (MPa) after 3 days | compressive strength (MPa) after 7 days | compressive strength (MPa) after 14 days | compressive strength (MPa) after 28 days |
|---|---|---|---|---|
| test specimen 5 | 0.1 | 1.0 | 1.5 | 1.5 |
| test specimen 6 | 0.9 | 2.3 | 5.3 | 6.0 |
| test specimen 7 | 0.7 | 2.0 | 3.2 | 3.2 |
| test specimen 8 | 0.5 | 2.1 | 2.8 | 3.1 |
| test specimen 9 | 0.4 | 1.0 | 2.7 | 2.8 |
| test specimen 10 | 0.2 | 1.0 | 2.4 | 2.5 |

Example 3 :

Other test specimens of different compositions are prepared as described above by changing the type of hydraulic binder.

- Test specimen 11 (comparative): 80 parts of mineral wool fragments comprising a sugar-based binding resin mixed with 20 parts of hydraulic binder of CEM I type
- Test specimen 12 (comparative): 80 parts of mineral wool fragments comprising a sugar-based binding resin mixed with 20 parts of hydraulic binder of blast furnace slag type (slag coming from Ladle furnace)
- Test specimen 13 (according to the invention): 80 parts of mineral wool fragments comprising a sugar-based binding resin mixed with 20 parts of hydraulic binder of blast furnace slag type and 1.4 parts of sodium silicate and 1.4 parts of lime are added to this mixture.

- Test specimen 14 (according to the invention): 80 parts of mineral wool fragments comprising a sugar-based binding resin mixed with 5 parts of hydraulic binder of blast furnace slag type. 2.5 parts of sodium silicate and 2.5 parts of lime are added to this mixture.

Table 3 below gives the values of the compressive strength measured for each of the test specimens

Table 3

|  | compressive strength (MPa) after 3 days | compressive strength (MPa) after 7 days | compressive strength (MPa) after 14 days |
|---|---|---|---|
| test specimen 11 | 0.4 | 1.1 | 1.9 |
| test specimen 12 | 0.4 | 0.5 | 0.8 |
| test specimen 13 | 4.4 | 8.4 | 13.3 |
| test specimen 14 | 4.6 | 10.3 | 15.3 |

Example 4: abrasion resistance measurements

Granules of various compositions are prepared according to the experimental protocol carried out in the laboratory described above.

- Granules G1 (comparative): they are obtained by dry mixing 90 parts of mineral wool fragments comprising a sugar-based binding resin with 10 parts of CEM II cement, then by adding 26%by weight of water relative to the total weight of this dry composition.
- Granules G2: they are obtained by dry mixing 90 parts of mineral wool fragments comprising a sugar-based binding resin with 10 parts of CEM I cement, then by adding 26%by weight of water relative to the total weight of this dry composition. 2.5 parts of sodium silicate and 2.5 parts of lime were pre-dissolved in the water added.
- Granules G3: they are obtained by dry mixing 90 parts of mineral wool fragments comprising a sugar-based binding resin with 5 parts of CEM I cement, then by adding 26%by weight of water relative to the total weight of this dry composition. 1.4 parts of sodium silicate and 1.4 parts of lime were pre-dissolved in the water added.

The residual granule content is measured for each of these samples and the results obtained are presented in the table 4 below:

Table 4

|  | residual granule content DU % |
|---|---|
| granules G1 | 80 |
| granules G2 | 90 |
| granules G3 | 90 |

Compressive strength measurements were carried out on these granules with the same equipment as that described above for the measurements carried out on the test specimens.

The results are given in the table 5 below:

Table 5

|  | compressive strength (MPa) after 3 days | compressive strength (MPa) after 7 days | compressive strength (MPa) after 14 days | compressive strength (MPa) after 28 days |
|---|---|---|---|---|
| granules G1 | 0.1 | 0.8 | 1.5 | 1.5 |
| granules G2 | 1.7 | 4 | 6.2 | 6.2 |
| granules G3 | 0.6 | 1.6 | 3.7 | 3.7 |

The granules obtained according to the process described in the present invention have good mechanical compressive strengths and also good abrasion resistances. It is observed that it is possible, owing to the presence of the setting accelerator additive, to significantly reduce the cement content in the manufacture of the granules according to the invention.

**Claims**

1. Process for preparing granules from mineral wool fragments comprising at least one binding resin comprising a sugar, said process comprising the steps of:

    - granulation consisting in mixing mineral wool fragments with at least one hydraulic binder in a granulator, in the presence of water and a setting accelerator additive that comprises at least one water-soluble calcium salt and at least one alkali metal silicate compound, the amount of mineral wool fragments representing at least 70%by weight of the total weight of the dry composition consisting of the mineral wool fragments and the hydraulic binder, and
    - drying the obtained granules.

2. Process according to Claim 1, **characterized in that** the alkali metal silicate is selected from sodium silicate, sodium metasilicate, potassium silicate, potassium metasilicate, lithium silicate, lithium metasilicate and mixtures thereof; preferably the alkali metal silicate is selected from sodium silicate, sodium metasilicate and mixtures thereof.

3. Process according to Claim 1 or 2, **characterized in that** the water-soluble calcium salt is selected from calcium formate, calcium acetate, calcium citrate, calcium lactate, calcium gluconate, calcium tartrate, calcium oxalate, calcium propionate, calcium stearate, calcium chloride, calcium bromide, calcium fluoride, calcium iodide, calcium chlorate, calcium iodate, calcium phosphate, calcium nitrate, calcium nitrite, calcium hypochloride, calcium bicarbonate, calcium sulphide, calcium hydroxide and mixtures thereof.

4. Process according to Claim 3, **characterized in that** the calcium salt is selected from calcium hydroxide, calcium nitrate and mixtures thereof.

5. Process according to one of the preceding claims, **characterized in that** the weight ratio between the calcium salt and the alkali metal silicate in the setting accelerator additive is between 0.2 and 2, and is preferably equal to 1.

6. Process according to one of the preceding claims, **characterized in that** the content of calcium salt and the content of alkali metal silicate added each represent from 0.5%to 10%of the weight of the dry composition, preferably from 0.8%to 5%of the weight of the dry composition.

7. Process according to one of the preceding claims, **characterized in that** the mineral wool fragments represent at least 80%and more preferably at least 90%by weight of the total weight of the dry composition.

8. Process according to one of the preceding claims, in which the hydraulic binder is selected from Portland cements, calcium aluminate cements, sulphoaluminate cements, belite cements, blast-furnace slags, cements of pozzolanic mixtures optionally comprising fly ash, silica fumes, limestone, calcined schist, natural or calcined pozzolans and/or natural or calcined clays, all of these cements being used alone or as a mixture.

9. Process according to one of the preceding claims, in which the alkali metal silicate and the calcium salt are pre-mixed and pre-dissolved in water before being added to the mixture of the mineral wool fragments and hydraulic binder.

10. Process according to Claim 9, in which the mixing in the granulator is carried out by simultaneously introducing the mineral wool fragments, the hydraulic binder, the water, and the pre-dissolved setting accelerator additive.

11. Process according to Claim 9, in which the mixing consists firstly in mixing the hydraulic binder, the water and the pre-dissolved setting accelerator additive, then in adding the mineral wool fragments.

12. Process according to one of the preceding claims, wherein the granulation in made in a rotating drum, preferably equipped with an inclined plate.

13. Process according to one of the preceding claims, **characterized in that** the drying of the granules is carried out at ambient temperature.

14. Process according to one of Claims 1 to 12, **characterized in that** the drying is carried out under a stream of hot air.

15. Granules capable of being obtained by the process according to one of Claims 1 to 14.

16. Use of the granules according to Claim 15 as fillers in slabs or wood structures or as floor levelling for example in wood and concrete slabs.

17. Use of the granules according to claim 15 as soil drainage material.


**Patentansprüche**

1. Verfahren zum Herstellen von Granulat aus Mineralwollefragmenten, umfassend mindestens ein Zucker umfassendes Bindeharz, wobei das Verfahren folgende Schritte umfasst:

    - Granulierung, bestehend aus Mischen von Mineralwollefragmenten mit mindestens einem hydraulischen Bindemittel in einem Granulator in Gegenwart von Wasser und einem Erstarrungsbeschleunigerzusatz, der mindestens ein wasserlösliches Calciumsalz und mindestens eine Alkalimetallsilikatverbindung umfasst, wobei die Menge von Mineralwollefragmenten mindestens 70 Gew.-% des Gesamtgewichts der aus den Mineralwollefragmenten und dem hydraulischen Bindemittel bestehenden trockenen Zusammensetzung ausmacht, und
    - Trocknen des erhaltenen Granulats.

2. Verfahren nach Anspruch 1, **dadurch gekennzeichnet, dass** das Alkalimetallsilikat aus Natriumsilikat, Natriummetasilikat, Kaliumsilikat, Kaliummetasilikat, Lithiumsilikat, Lithiummetasilikat und Mischungen davon ausgewählt ist; vorzugsweise das Alkalimetallsilikat aus Natriumsilikat, Natriummetasilikat und Mischungen davon ausgewählt ist.

3. Verfahren nach Anspruch 1 oder 2, **dadurch gekennzeichnet, dass** das wasserlösliche Calciumsalz ausgewählt ist aus Calciumformiat, Calciumacetat, Calciumcitrat, Calciumlactat, Calciumgluconat, Calciumtartrat, Calciumoxalat, Calciumpropionat, Calciumstearat, Calciumchlorid, Calciumbromid, Calciumfluorid, Calciumiodid, Calciumchlorat, Calciumiodat, Calciumphosphat, Calciumnitrat, Calciumnitrit, Calciumhypochlorid, Calciumbicarbonat, Calciumsulfid, Calciumhydroxid und Mischungen davon.

4. Verfahren nach Anspruch 3, **dadurch gekennzeichnet, dass** das Calciumsalz aus Calciumhydroxid, Calciumnitrat und Mischungen davon ausgewählt ist.

5. Verfahren nach einem der vorhergehenden Ansprüche, **dadurch gekennzeichnet, dass** das Gewichtsverhältnis zwischen dem Calciumsalz und dem Alkalimetallsilikat im Erstarrungsbeschleunigerzusatz zwischen 0,2 und 2 liegt und vorzugsweise gleich 1 ist.

**6.** Verfahren nach einem der vorhergehenden Ansprüche, **dadurch gekennzeichnet, dass** der Gehalt des Calciumsalzes und der Gehalt des zugesetzten Alkalimetallsilikats jeweils von 0,5 % bis 10 % des Gewichts der trockenen Zusammensetzung, vorzugsweise von 0,8 % bis 5 % des Gewichts der trockenen Zusammensetzung, ausmachen.

**7.** Verfahren nach einem der vorhergehenden Ansprüche, **dadurch gekennzeichnet, dass** die Mineralwollefragmente mindestens 80 Gew.-% und mehr bevorzugt mindestens 90 Gew.-% des Gesamtgewichts der trockenen Zusammensetzung ausmachen.

**8.** Verfahren nach einem der vorhergehenden Ansprüche, bei dem das hydraulische Bindemittel ausgewählt ist aus Portlandzementen, Calciumaluminatzementen, Sulfoaluminatzementen, Belit-Zementen, Hochofenschlacken, Zementen aus Puzzolanmischungen, die gegebenenfalls Flugasche, Quarzstäube, Kalkstein, calcinierten Schiefer, natürliche oder calcinierte Puzzolane und/oder natürliche oder calcinierte Tone umfassen, wobei alle diese Zemente allein oder als Mischung verwendet werden.

**9.** Verfahren nach einem der vorhergehenden Ansprüche, wobei das Alkalimetallsilikat und das Calciumsalz in Wasser vorgemischt und vorgelöst werden, bevor sie der Mischung aus den Mineralwollefragmenten und dem hydraulischen Bindemittel zugesetzt werden.

**10.** Verfahren nach Anspruch 9, bei dem das Mischen im Granulator durchgeführt wird, indem die Mineralwollefragmente, das hydraulische Bindemittel, das Wasser und der vorgelöste Erstarrungsbeschleunigerzusatz gleichzeitig zugeführt werden.

**11.** Verfahren nach Anspruch 9, bei dem das Mischen zunächst aus dem Mischen des hydraulischen Bindemittels, des Wassers und des vorgelösten Erstarrungsbeschleunigerzusatzes und dem anschließenden Zusetzen der Mineralwollefragmente besteht.

**12.** Verfahren nach einem der vorhergehenden Ansprüche, wobei die Granulierung in einer rotierenden Trommel vorgenommen wird, die vorzugsweise mit einer geneigten Platte ausgestattet ist.

**13.** Verfahren nach einem der vorhergehenden Ansprüche, **dadurch gekennzeichnet, dass** das Trocknen des Granulats bei Umgebungstemperatur durchgeführt wird.

**14.** Verfahren nach einem der Ansprüche 1 bis 12, **dadurch gekennzeichnet, dass** das Trocknen unter einem Heißluftstrom durchgeführt wird.

**15.** Granulat, das durch das Verfahren nach einem der Ansprüche 1 bis 14 erhalten werden kann.

**16.** Verwendung des Granulats nach Anspruch 15 als Füllstoffe in Platten oder Holzstrukturen oder als Bodennivellierung zum Beispiel in Holz- und Betonplatten.

**17.** Verwendung des Granulats nach Anspruch 15 als Bodenentwässerungsmaterial.


**Revendications**

**1.** Procédé de préparation de granulés à partir de fragments de laine minérale comprenant au moins une résine d'encollage comprenant un sucre, ledit procédé comprenant les étapes de :

- granulation consistant à mélanger des fragments de laine minérale avec au moins un liant hydraulique dans un granulateur, en présence d'eau et d'un additif accélérateur de prise comprenant au moins un sel de calcium soluble dans l'eau et au moins un composé silicate d'alcalin, la quantité de fragments de laine minérale représentant au moins 70% en poids du poids total de la composition sèche constituée des fragments de laine minérale et du liant hydraulique, et
- séchage des granulés obtenus.

**2.** Procédé selon la revendication 1, **caractérisé en ce que** le silicate alcalin est choisi parmi le silicate de sodium, le métasilicate de sodium, le silicate de potassium, le métasilicate de potassium, le silicate de lithium, le métasilicate de lithium et leurs mélanges, le silicate de métal alcalin étant de préférence choisi parmi le silicate de sodium, le métasilicate de sodium et leurs mélanges.

3. Procédé selon la revendication 1 ou 2, **caractérisé en ce que** le sel de calcium soluble est choisi parmi le formate de calcium, l'acétate de calcium, le citrate de calcium, le lactate de calcium, le gluconate de calcium, le tartrate de calcium, l'oxalate de calcium, le propionate de calcium, le stéarate de calcium, le chlorure de calcium, le bromure de calcium, le fluorure de calcium, l'iodure de calcium, le chlorate de calcium, l'iodate de calcium, le phosphate de calcium, le nitrate de calcium, le nitrite de calcium, l'hypochlorure de calcium, le bicarbonate de calcium, le sulfure de calcium, l'hydroxyde de calcium et leurs mélanges.

4. Procédé selon la revendication 3, **caractérisé en ce que** le sel de calcium est choisi parmi l'hydroxyde de calcium, le nitrate de calcium et leurs mélanges.

5. Procédé selon l'une des revendications précédentes, **caractérisé en ce que** le rapport pondéral entre le sel de calcium et le silicate alcalin dans l'additif accélérateur de prise est entre 0,2 et 2, et de préférence égal à 1.

6. Procédé selon l'une des revendications précédentes, **caractérisé en ce que** la teneur en sel de calcium et la teneur en silicate alcalin ajouté représentent chacun de 0,5 à 10% du poids de la composition sèche, de préférence de 0,8 à 5% du poids de la composition sèche.

7. Procédé selon l'une des revendications précédentes, **caractérisé en ce que** les fragments de laine minérale représentent au moins 80% et de préférence au moins 90% en poids du poids totale de la composition sèche.

8. Procédé selon l'une des revendications précédentes, dans lequel le liant hydraulique est choisi parmi les ciments Portland, les ciments d'aluminate de calcium, les ciments sulfoalumineux, les ciments bélitiques, les laitiers de haut-fourneau, les ciments de mélanges pouzzolaniques comprenant éventuellement des cendres volantes, des fumées de silice, du calcaire, du schiste calciné, des pouzzolanes naturelles ou calcinées et/ou des argiles naturelles ou calcinées, l'ensemble de ces ciments étant utilisé seul ou en mélange.

9. Procédé selon l'une des revendications précédentes, dans lequel le silicate de métal alcalin et le sel de calcium sont pré-mixés et pré-dissouts dans l'eau avant d'être ajoutés au mélange des fragments de laine minérale et du liant hydraulique.

10. Procédé selon la revendication 9, dans lequel le mélange dans le granulateur est réalisé en introduisant de manière simultanée les fragments de laine minérale, le liant hydraulique, l'eau et l'additif accélérateur de prise pré-dissout.

11. Procédé selon la revendication 9, dans lequel le mélange consiste d'abord à mélanger le liant hydraulique, l'eau et l'additif accélérateur de prise pré-dissous, puis à ajouter les fragments de laine minérale.

12. Procédé selon l'une des revendications précédentes, dans lequel la granulation est faite en tambour rotatif, de préférence équipé d'un plateau incliné.

13. Procédé selon l'une des revendications précédentes, **caractérisé en ce que** le séchage des granulés est réalisé à température ambiante.

14. Procédé selon l'une des revendications 1 à 12, **caractérisé en ce que** le séchage est réalisé sous un flux d'air chaud.

15. Granulés susceptibles d'être obtenus par le procédé selon l'une des revendications 1 à 14.

16. Utilisation des granulés selon la revendication 15 comme charges dans des dalles ou des structures en bois ou comme enduit de ragréage des sols, par exemple dans des dalles en bois ou en béton.

17. Utilisation des granulés selon la revendication 15 comme matériau de drainage des sols.

**REFERENCES CITED IN THE DESCRIPTION**

**Patent documents cited in the description**

- EP 2415721 A
- JP 2002187751 B
- US 20100282996 A
- US 20120263934 A
- WO 2012168619 A
- WO 2012168621 A